# EUROPEAN PATENT SPECIFICATION

(11) **EP 2 250 402 B1**
(45) Date of publication and mention of the grant of the patent: **31.08.2011**
(21) Application number: 09711079.5
(22) Date of filing: 10.02.2009
(51) Int. Cl.: F16H 31/00, F03B 13/18, F03B 13/20, F03G 7/08

(54) **DEVICE FOR CONVERTING A BIDIRECTIONAL ROTATION MOTION AROUND TWO ROTATION AXES INTO AN UNIDIRECTIONAL ROTATION MOTION AROUND A SINGLE ROTATION AXIS, AND POWER PRODUCTION SYSTEM USING SAID DEVICE**
VORRICHTUNG ZUR UMWANDLUNG EINER BIDIREKTIONALEN DREHBEWEGUNG UM ZWEI DREHACHSEN IN EINE UNIDIREKTIONALE DREHBEWEGUNG UM EINE DREHACHSE SOWIE ENERGIEERZEUGUNGSSYSTEM MIT DIESER VORRICHTUNG
DISPOSITIF POUR CONVERTIR UN MOUVEMENT DE ROTATION BIDIRECTIONNEL AUTOUR DE DEUX AXES DE ROTATION EN UN MOUVEMENT DE ROTATION UNIDIRECTIONNEL AUTOUR D'UN SEUL AXE DE ROTATION, ET SYSTÈME DE PRODUCTION D'ÉNERGIE ÉLECTRIQUE UTILISANT LEDIT DISPOSITIF

(30) Priority: 11.02.2008 GB 0802483
(43) Date of publication of application: 17.11.2010
(73) Proprietor: Wickett, Martin John, 72320 Gréez sur Roc (FR)
(72) Inventor: Wickett, Martin John, 72320 Gréez sur Roc (FR)
(74) Representative: Chaillot, Geneviève
(86) International application number: PCT/EP2009/051514
(87) International publication number: WO 2009/101085

(56) References cited:
- WO-A-2005/071258
- FR-A- 2 807 113
- GB-A- 297 720
- JP-A- 55 057 674
- US-A- 613 075
- US-A- 4 352 023
- US-A- 5 860 320
- US-A1- 2006 150 626
- US-B1- 6 247 308

## Description

The present invention relates to the field of motion transmission, and to the field of energy production.

In particular, the present invention relates to a device for converting a bidirectional rotation motion around two shafts or on two rotation axes into a unidirectional rotation motion around a single axis, and to a power production system using said device.

US 6 247 308, in the name of Yedidia Sollel Tel Aviv, discloses a transmission device for converting a rotation motion around a first shaft into a rotation motion around a second shaft, perpendicular to the first shaft.

US 5,860,320 discloses a transmission device according to the preamble of independent claim 1.

The present invention provides a device for converting a bidirectional rotation motion around two shafts into a unidirectional rotation motion around a single axis.

Compared to the prior art, the present invention allows, from two input rotation motions on two perpendicular shafts, to have a rotation motion on an output rotation axis, in a single direction of rotation, the direction of rotation of the output rotation axis being set by the construction of the device.

Whatever the direction of the input rotation motion, the direction of rotation of the output rotation axis is set and is always the same.

This device can thereafter be used in a power production system.

Indeed, means introducing an instability can be provided on at least one of the two input shafts, that drive at least one of the input shafts into rotation, whether in a clockwise or anticlockwise direction.

If the means introducing instability, together with the device, are appropriately disposed into a suitable environment acting on said means, a continuous rotation of the output axis, in a single direction of rotation, can be obtained.

The instability introducing means can take the form, for instance, of a shape having several faces, each face being in a different plane. The shape is thereafter attached to at least one of the two input shafts of the rotation motion converting device, and as stated earlier, the assembly is arranged into an environment, e.g. a fluid flow, acting on at least one of said faces of the shape. The action of the environment on at least one of said faces of the shape will result in the three-dimensional motion of the shape, and as a consequence a rotation motion, whether clockwise or anticlockwise, of at least one of the input shafts of the rotation motion converting device, which in turn will result in a rotation motion, in a single direction of rotation, on the output rotation axis.

A power production device, such as an alternator, can be arranged on the output shaft, in order to be able to produce power with the motion of the output shaft.

An application of such a device can be, for example, a power production device using water streams. As the instability introducing means move with the stream of water, such a system is friendly for the environment, as it will cause no harm to aquatic wildlife, contrary to current power production devices, such as turbines, whose blades can damage the wildlife. The system can be used in the sea, whether offshore or close to the coast, and in rivers.

The rotation motion converting device of the invention can have different sizes (from centimetres to several meters), according to the application. When used in the sea, the size (several meters) of the power production system, rotation motion converting device and instability introducing means, is such that it can collect an important quantity of energy from the streams.

The only part of the system that needs to be into contact with water is the instability introducing means, therefore the rotation motion converting device and its various mechanisms do not need to be immersed, thereby diminishing the corrosion of mechanical parts with respect to, for example, a turbine, a good part of which needs to be immerged to operate properly. The ease of maintenance of the different parts of the system is also improved. The whole system could also be arranged in a sealed unit, totally immersed, according to the application.

The power production system can also have a slightly inferior size (-m), to be adapted to fit in a any kind of vessel, such as sailboats. The system can be used to produce power for the sailboat to load batteries, for example, the system being immersed and electrically connected to the boat. The immersed part of the system can collect energy from the water streams or from the tide, or from any kind of wave, and, with an alternator on the output axis, produces power from the movement on the input shafts. This can be useful, especially as vessels are equipped nowadays with many electronic devices that need to be powered. The power production system of the invention allows to have less batteries on-board, leaving more space for other loads, and also allows more time spent without the need to go in a port to load the batteries.

The power production system can also be used with air streams, to produce power in remote environments, where water streams cannot be used and where power is necessary.

The power production system of the invention can also have a small size (cm) to be able to be carried upon by a human or an animal, whose motion creates sufficient instability on the input shafts to result in a rotation of the output shaft. Small quantities of energy can thereby be produced to power low-power electronic or electrical devices, such as GPS markers, to track wild animals, or cell phones, whose batteries could be powered by such a system.

Another implementation of the device could be to use it under a surface on which people are walking. The vibration caused on the surface by people steps can be the source of instability, thereafter used as input to one or several power production system in series according to the invention, to produce power from the vibrations produced by people walking on the surface. This can be used in places where a lot of people are walking, such as in stations, airports, etc.

The amount of produced power can be varied, by mechanical transmission means, between the input shafts and the output rotation axis, according to the gear ratios between the input shafts and the output rotation axis.

The device according to the invention can be used in various situations, where instability can be used as input to produce power.

For example, the device could be used in kitchen or other areas in homes, where the rotation motion at the end of the shaft is used.

The device according to the invention can also be used, for example in factories, where a user has to produce a rotation motion. The invention could then be used, avoiding the risk of RSI (repetitive strain injury) for the user.

The device of the invention could also be used in toys, such as skateboards or the like, where the user, by a three-dimensional motion on the board, produces a rotation motion.

The disabled could also easily use the device, instability at one end of the device producing a rotation motion of the output shaft. Many applications could be found for this particular use, such as acting on a mechanical device to help the disabled in their everyday life.

The dimensions, the gear ratios as well as the transmission means between the input shafts and the output shaft can be adapted for a particular use of the device to create a power source.

In the application, unless stated otherwise, bidirectional, when applied to a rotation motion around a rotation axis, designates a rotation motion around the shaft that can be both clockwise and anti-clockwise.

Similarly, unless stated otherwise, unidirectional, when applied to a rotation motion around a rotation axis, designates a rotation motion around the shaft that can be either clockwise or anticlockwise.

An object of the invention is therefore a device producing unidirectional rotation motion as output from any bidirectional rotation motion as input, comprising:
- a first input rotation axis;
- a second input rotation axis, orthogonal to the first input rotation axis;
- an output rotation axis;
- transmission means provided between the first input rotation axis and the output rotation axis and between the second input rotation axis and the output rotation axis, in order to convert a clockwise or anti-clockwise rotation motion on the first input rotation axis and/or on the second input rotation axis into a unidirectional rotation motion on the output rotation axis, characterized in that one of the first input rotation axes is the same as the output rotation axis.

Preferably, the transmission means between the first input rotation axis and the output rotation axis and the transmission means between the second input rotation axis and the output rotation axis each comprise at least a pair of unidirectional members, wherein for each pair, one member is activated by a first rotation direction on the corresponding input rotation axis, the other member of the pair being activated by a second rotation direction on the corresponding input rotation axis, opposite to the first rotation direction.

The unidirectional members can be one-way clutches, unidirectional hydraulic turbines, hydraulic pumps, hydraulic drives, etc.

According to the invention, the transmission means from the first input rotation axis to the output rotation axis and the transmission means from the second input rotation axis to the output rotation axis are independent.

The transmission from the first input rotation axis is therefore directly transmitted on the output rotation axis, and the transmission from the second input rotation axis is directly transmitted on the output rotation axis

Preferably, the transmissions means between the input rotation axes and the output rotation axis are any of toothed gears, chains and cogs, belts and pulley wheels, hydraulic drives and any combination thereof.

For example, the transmission of rotation between the input axes and the output axis can be through mechanical transmission means, or through fluids.

Preferably, the shafts are mounted in alignment with the two input rotation axes to provide the bidirectional input rotation motion on the two input rotation axes.

Preferably, a shaft is mounted in alignment with the output rotation axes, the unidirectional rotation output motion being transferred to the shaft by the transmission means.

Preferably, the gear ratios between the first input rotation axis and the output shaft, and between the second input rotation axis and the output shaft are identical.

Preferably, the gear ratios between the first input rotation axis and the output shaft, and between the second input rotation axis and the output shaft are different.

Preferably, the transmission means for the input rotation axes are hydraulic drives, any bidirectional rotation movement on the input rotation axis producing an output fluid flow, the output unidirectional rotation motion of the device being produced by an unidirectional hydraulic turbine driven by the fluid flow.

Another object of the invention is a power production system, characterized in that it comprises:
- the device as defined above;
- input means cooperating with an outer environment of the system, to create any bidirectional rotation motion on any of the input rotation axes;
- power production means provided on the output rotation axis to create power from the unidirectional rotation motion created on the output rotation axis.

Preferably, said power production means is an alternator.

Preferably, the outer environment is a fluid flow.

Preferably, that the outer environment is the sea and in that input means consist in a spherical buoy, into which are formed two parallel beams, both beams forming in use a chord of the sphere in the same substantially horizontal plane, the device being pivotally mounted between these two parallel beams, the pivoting axis of the device with respect to said beams constituting the first input rotation axis of the device, a weight being pivotally suspended to the device, the pivoting axis of the suspended weight being perpendicular to the first input rotation axis and constituting the second input rotation axis of the device, a second weight being centrally fixed to the base of the buoy, and the buoy having an offset anchorage producing a non stable movement of the buoy and therefore a rotation of the device on its two input rotation axes to provide bidirectional rotation movements on the input rotation axes of the device.

Preferably, the two parallel beams are formed in the central horizontal plane of the sphere.

The present invention will now be described further, with reference to the accompanying drawings, on which:
- Figure 1 is a perspective view of a rotation motion converting device according to a first embodiment of the invention, for converting a bidirectional rotation motion around two input shafts into a unidirectional rotation motion around one output shaft;
- Figure 2 is an view in elevation of the device of Figure 1;
- Figure 3 is a side view of the device of Figure 1;
- Figure 4 is a perspective view of the device according to the invention in another embodiment of the invention;
- Figure 5 is a view through section AA of Figure 4;
- Figure 6 is a view through section BB of Figure 4;
- Figure 7 is an view in elevation of the detail D of Figure 5;
- Figures 8A to 8C are views through sections EE, FF and GG of Figure 7, respectively;
- Figure 9 is a view through section CC of Figure 4;
- Figure 10 is a view similar to the view of Figure 9, with a third rotation motion conversion embodiment between the input shafts and the output shaft;
- Figure 11 is a cut-away side view of the device according to the invention in another embodiment of the invention;
- Figure 12 is a cut-away view in elevation of the device in the embodiment of Figure 11;
- Figures 13A, 13B, 13C are top, front and side views of a power production system according to an embodiment of the invention;
- Figure 14 is an top view of a fifth embodiment of a device according to the invention; and
- Figure 15 shows an hydraulic pump used in the device of Figure 14.

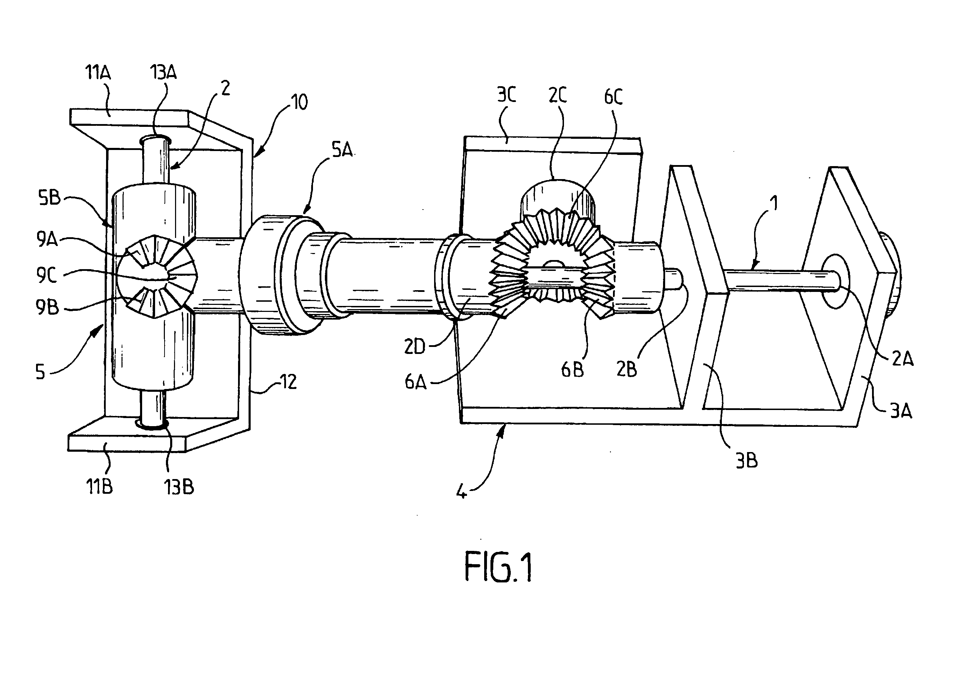

Referring now to Figures 1-3, a first embodiment of the device for converting a bidirectional rotation motion around two perpendicular input rotation axes into a unidirectional rotation motion around a single output rotation axis is depicted, the gear ratio between the input rotation axes and the output rotation axis being of 1:1 in this embodiment.

In this embodiment, an output shaft 1 is rotatably mounted on the output rotation axis, also referenced with the reference numeral 1.

A rotatable housing 5, more fully described thereafter, is rotatably mounted on said shaft 1, in a manner more fully described thereafter, the rotation axis of said rotatable housing 5 being the same as the output rotation axis 1, and constituting the first input rotation axis, also referenced 1.

A shaft 2, more fully described thereafter, is rotatably mounted at one end 1B of the output shaft 1, perpendicularly to the output shaft 1, and constitute the second input rotation axis, perpendicular to the first input rotation axis and to the output rotation axis.

The shaft 1 is supported at one end 1A by two bearings 2A, 2B mounted at the respective centres of two parallel, spaced-apart, vertical walls 3A, 3B disposed on an horizontal support member 4.

A housing 5, on the other end 1B of the shaft 1, is formed with two hollow cylindrical parts 5A, 5B, whose longitudinal directions are orthogonal, and of different lengths, the cylindrical part 5A being in the direction of the output rotation axis 1.

The cylindrical part 5A is connected at one of its ends to the centre of the cylindrical part 5B, thereby forming a T-shaped housing 5. The other end of the cylindrical part 5A supports a bearing 2D to support the shaft 1, whose end 1B is inside the cylindrical part 5A.

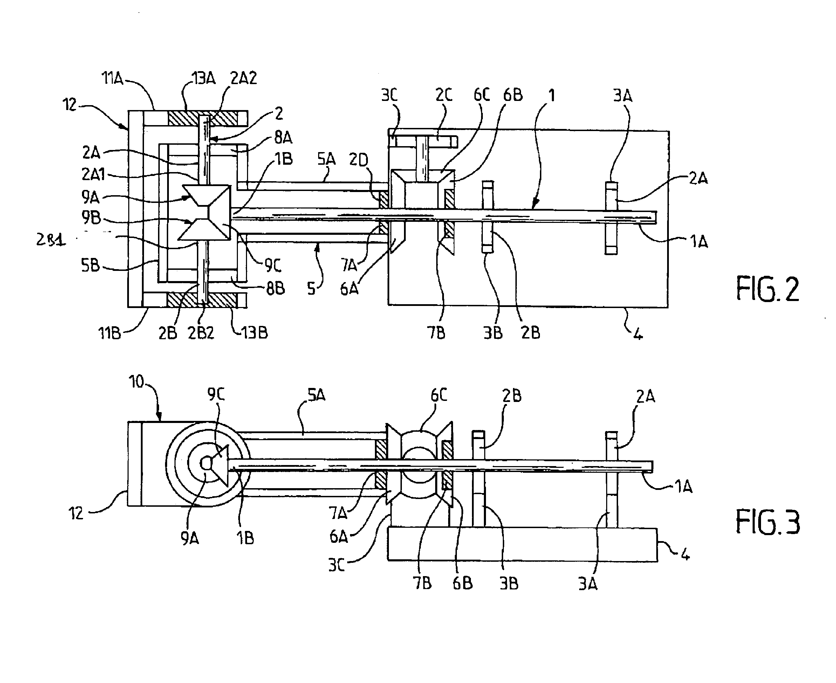

The housing 5 can be driven into rotation around shaft 1, clockwise or anticlockwise when viewed from the left-hand side of Figure 2.

In the following description, unless stated otherwise, the directions of rotation will be considered as viewed from the left-hand side of Figure 2.

A gearing mechanism, mounted intermediate the ends 1A, 1B of shaft 1 comprises three bevel gears 6A, 6B, 6C, two bevel gears 6A, 6B being mounted on shaft 1, and meshing through a third bevel gear 6C, supported by a third bearing 2C mounted at the centre of a third vertical wall 3C, mounted on the horizontal support member 4, orthogonal to the first two walls 3A and 3B.

A first one-way clutch 7A supported by the bearing 2D, locking on shaft 1 when the cylindrical part 5A of the housing 5 is rotated clockwise, is disposed between the housing 5 and the first bevel gear 6A.

A second one-way clutch 7B is mounted with the bevel gear 6B, the one-way clutch locking on shaft 1 when the bevel gear 6B rotates clockwise.

Thus, a clockwise motion of the cylindrical part 5A of housing 5 will result in the one-way clutch 7A locking on shaft 1 at its end 1A. The clockwise rotation motion of the bevel gear 6A results in the bevel gear 6C rotating clockwise, with reference to Figure 2, which in turn results in the bevel gear 6B rotating anti-clockwise, thereby not locking the one-way clutch 7B on shaft 1. The clockwise rotation motion of the cylindrical part 5A of housing 5 therefore results in output shaft 1 rotating clockwise through the one-way clutch 7A.

Similarly, when the cylindrical part 5A of housing 5 is rotated anti-clockwise, the one-way clutch 7A does not lock on shaft 1, and the rotation motion of the cylindrical part 5A of the housing 5 is transmitted via bevel gears 6A, 6C to the bevel gear 6B. The anti-clockwise rotation motion of the bevel gear 6A results in the bevel gear 6C rotating anti-clockwise, with reference to Figure 2, which in turn results in the bevel gear 6B rotating clockwise, thereby locking the one-way clutch 7B on shaft 1. The anti-clockwise rotation motion of the cylindrical part 5A of housing 5 therefore results in shaft 1 rotating clockwise through the one-way clutch 7B.

The gearing mechanism formed by the bevel gears 6A, 6B, 6C and the one-way clutches 7A and 7B thereby ensures that any rotation, whether clockwise or anticlockwise of the first cylindrical part 5A results in the output shaft 1 rotating clockwise.

The second input shaft 2 has two halves 2A, 2B, respectively.

These two halves are supported by two bearings 8A, 8B, at each end of the second cylindrical part 5B of housing 5.

Each half 2A, 2B is partially introduced in the cylindrical part 5B of housing 5, the ends 2A1, 2B1 of the two-halves 2A, 2B of shaft 2 introduced in the cylindrical part 5B of the housing 5 bearing a bevel gear 9A, 9B, respectively, the two other ends 2A2, 2B2 of the two halves 2A, 2B of input shaft 2 projecting from each side of the cylindrical part 5B of housing 5.

The bevel gears 9A, 9B of the two halves 2A, 2B mesh with a third bevel gear 9C at the end 1B of shaft 1, where the two cylindrical parts 5A, 5B of housing 5 are connected.

An part 10 is formed with two parallel walls 11A, 11B connected to an third wall 12, perpendicular to the two walls 11A, 11B. Each wall 11A, 11B, has at its centre a one-way clutch, 13A, 13B, respectively.

The ends 2A2, 2B2 of the two halves 2A, 2B respectively engage with one-way clutches 13A, 13B supported by the walls 11A, 11B.

When viewed from the front of Figure 3, the one-way clutch 13A locks when rotated anti-clockwise, and the one-way clutch 13B locks when rotated clockwise.

If we refer in particular to Figure 3, a rotation from top to bottom of the part 10 results in the one-way clutch 13A locking of the half 2A of shaft 2, to rotate the half 2A anti-clockwise, when viewed from the front of Figure 3, the one-way clutch 13B remaining unlocked.

The anti-clockwise rotation of half 2A of shaft 2 results in bevel gear 9A rotating anti-clockwise, when viewed from the front of Figure 3 and therefore results in the bevel gear 9C rotating clockwise.

Similarly, a rotation from bottom to top of the part 10 results in the one-way clutch 13B locking of the half 2B of shaft 2, to rotate the half 2B anti-clockwise, when viewed from the front of Figure 3, the one-way clutch 13A remaining unlocked.

The anti-clockwise rotation of half 2B of shaft 2 results in bevel gear 9B rotating anti-clockwise, when viewed from the front of Figure 3 and therefore results in the bevel gear 9C rotating clockwise.

Therefore, any rotation around shaft 2, whether clockwise or anti-clockwise, results in the clockwise rotation of shaft 1.

Any rotation of the housing 5 around rotation axis 1 also results in a clockwise rotation of shaft 1.

In the latter embodiment described with reference to Figure 1-3, the gear ratio between the input shafts and the output shaft is 1:1.

A torque appears at the end 1B of shaft 1 with this gear ratio of 1:1. This torque, which increases with the gear ratio, can be reduced using other transmission means between the input shafts and the output shaft, as explained with reference to the second embodiment of the invention.

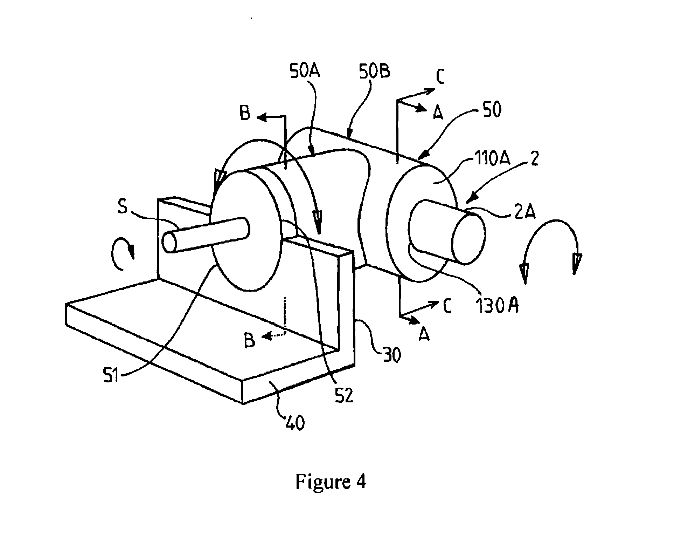

The Figures 4-9 describe another embodiment of the present invention, where the transmission between the input gears and the output gears is by means of pulleys and belts, which suppresses the torque at the shaft end 1B.

As can be seen from Figure 4, the device according to the second embodiment of the invention is formed with a mobile housing 50, supported by a bearing 51 in a hollow disc 52, said disc being mounted on a vertical wall 30 of an horizontal support member 40, as shown in Figure 4.

The mobile housing 50 is formed with two cylindrical orthogonal parts, 50A and 50B respectively, whose longitudinal directions respectively match the directions of the two input rotation axes. The longitudinal direction of the cylindrical part 50A corresponds to the direction of the output shaft S, and the longitudinal direction of the cylindrical part 50B corresponds to the direction orthogonal to the output shaft S, the direction of the output shaft S constituting the output rotation axis.

The housing 50 is rotatable clockwise or anti-clockwise around output shaft S.

Each end of the cylindrical part 50B is a vertical wall, the vertical wall 110A only in this embodiment being provided at its centre with a bearing, respectively 130A.

These bearings 130A, similarly to the bearings of Figure 2, support two halves (only half 2A shown on Figures) of an input shaft 2, whose ends inside the housing 50 bear an element similar to the part 10 of Figure 2 and 3, not shown in this embodiment. As for the prior Figures 2 and 3, the part is rotatable clockwise or anti-clockwise around two halves 2A of the input shaft 2, when viewed from the left-hand side of Figure 4.

In the following, and unless states otherwise, the directions of rotation will be those viewed from the left-hand side of Figure 4.

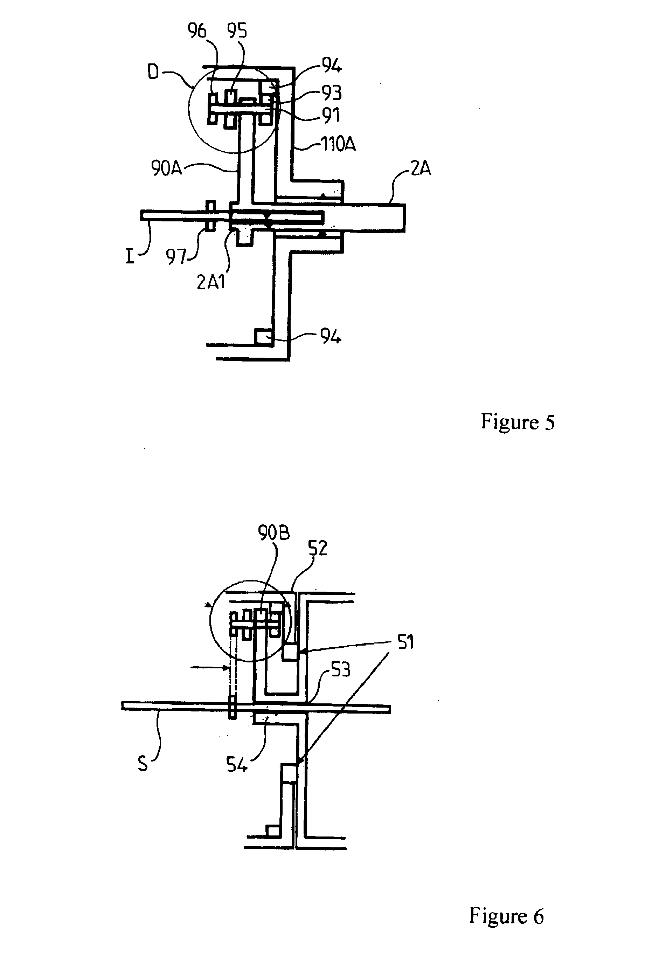

If we refer more particularly to Figure 5, we can see in more detail the transmission from the input shaft 2 to the output shaft S, explained with reference to wall 110A of the cylindrical part 50B of housing 50 in Figure 4.

As can be seen from Figure 5, the input half shaft 2A is hollow. An intermediary shaft I is supported by bearings inside the half input shaft 2A.

The half input shaft 2A bears at its distal end 2A1 a flat rectangular bar 90A, whose surfaces are parallel to the wall 110A.

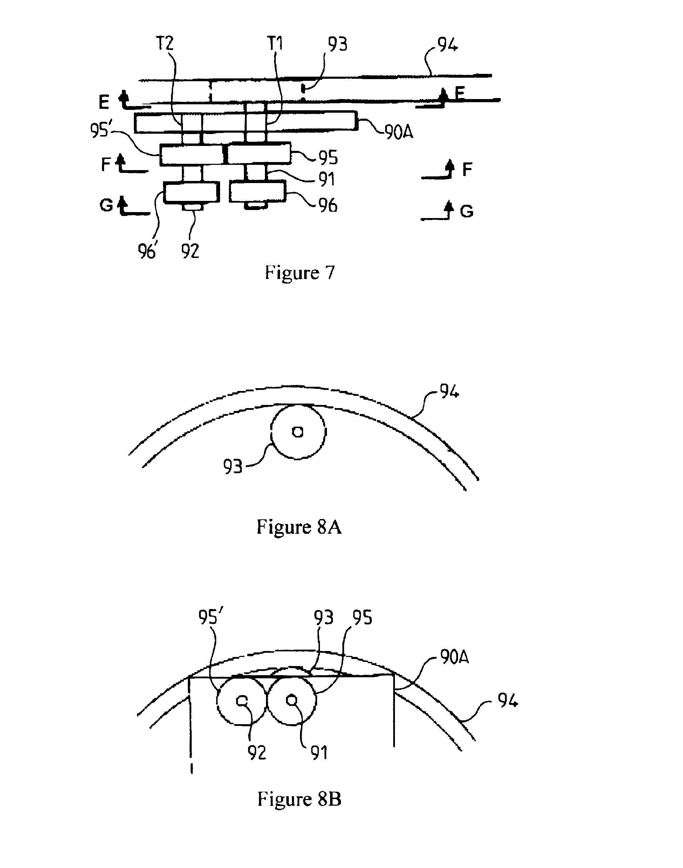

As can be seen from Figure 7, the distal end of this rectangular bar is formed with two holes, respectively T1 and T2, both being through holes in the flat rectangular bar 90A in the direction of the half input shaft 2A, the two holes T1, T2 being radially spaced at the distal end of the vertical bar 90A.

The first hole T1 bears a first axis 91, which protrudes from the two sides of the bar 90A, and the second hole bears a second axis 92, protruding only from the surface of the flat rectangular bar 90A facing the inside of the cylindrical part 50B, and not protruding from the surface of the flat rectangular bar 90A facing the inner surface of the wall 110A.

The end of the axis 91 protruding from the rectangular bar 90A towards the inner face of the wall 110A bears a wheel 93, rotatable with the axis 91, that runs on an inner annular ring 94, whose thickness on the inner cylindrical wall of the cylindrical part 50B corresponds to the thickness of the wheel 93, the annular ring 94 being disposed on the inner side of the wall 110A.

The other end of the axis 91, towards the inside of the cylindrical part 50B bears in this order, from the surface of the flat rectangular bar 90A: a gear 95 and a pulley 96, both being rotatable around the axis 91, the pulley 96 incorporating a one-way clutch.

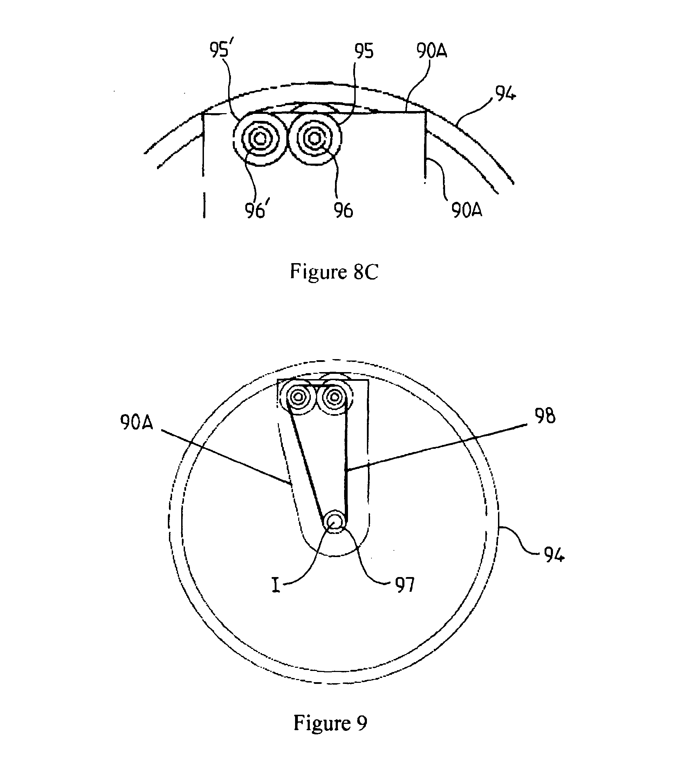

The axis 92 bears in this order, from the surface of the flat rectangular bar 90A a gear 95', meshing with the gear 95 on the axis 91, and a pulley 96', the gear 95' and the pulley 96' both being rotatable around the axis, and the pulley 96' incorporating a one-way clutch, the one-way clutches of the pulleys 96 and 96' locking in the same direction of rotation, clockwise when viewed from the front of Figure 8C.

The intermediate axis I also bears a pulley 97, located immediately below the pulleys 96 and 96' in the vertical direction.

A belt 98 connects the pulleys 96, 96' and 97, as shown in Figure 9, where the belt 98 is driven by the pulleys 96 and 96' incorporating one-way clutches of the flat rectangular bar 90A, in order to rotate the intermediate axis I using the pulley 97.

When the input half axis 2A rotates clockwise, the flat rectangular bar 90A is rotated clockwise around the half axis 2A, resulting in the wheel 93 running on the inner annular ring 94, the wheel rotating anti-clockwise, as viewed from Figure 8A. As a consequence, the axis 91 will be rotated anti-clockwise by the wheel 93, as will be the gear 95. The one-way clutch of the pulley 96 does not lock, therefore the pulley 96 is freewheeling.

The anti-clockwise rotation of the gear 95 results in a clockwise rotation of the gear 95' on the axis 92. As a consequence, the axis 92 rotating clockwise, so will the pulley 96', as a consequence of the locking of the one-way clutch incorporated in said pulley 96'.

The belt 98 is therefore driven by the pulley 96', and the belt itself rotates clockwise the pulley 97.

The clockwise rotation of the pulley thereafter results in the intermediate axis I rotating clockwise

Similarly, when the half input shaft 2A rotates anti-clockwise, as viewed from Figure 9, the flat rectangular bar 90A is rotated anti-clockwise around the half input shaft, resulting in the wheel 93 running on the inner annular ring 94, the wheel 93 rotating clockwise, as viewed from Figure 8A. As a consequence, the axis 91 will be rotated clockwise by the clockwise rotation of the wheel 93, so will be the first gear 95 of the axis 91. The pulley 96 of the axis 91 will be rotated clockwise, its incorporated one-way clutch locking in this direction of rotation.

The clockwise rotation of the first gear 95 of the axis 91 results in the anti-clockwise rotation of the second gear 95' of the axis 92. The axis 92 rotating anti-clock-wise, the incorporated one-way clutch of the pulley 96' will not lock, and the pulley 96' will freewheel.

The pulley 96, rotating clockwise when viewed from Figure 8C, drives the belt 98, so that it turns clockwise, as viewed from Figure 9. As previously seen, the belt 98 rotates the pulley 97 on the intermediate axis I, thereby rotating the intermediate axis clockwise.

A clockwise rotation or an anti-clockwise rotation of the half axis 2A of the shaft 2 therefore results in a clockwise rotation of the intermediate shaft I.

The rotation of the intermediate axis I is thereafter transmitted to the output shaft S by gear means similar to the gear means 9A, 9B depicted in Figure 3, and not shown in this embodiment.

Figure 6 illustrates the way a rotation motion of the cylindrical part 50A of housing 50 of Figure 4 is transmitted to the output shaft S.

A bearing 51 mounted on the hollow disc 52 of the wall 30 supports the cylindrical part 50A.

The end wall of the cylindrical part 50A of the housing 50 which contacts the hollow disc 52 has at its centre an opening 53, which is connected to a hollow cylinder 54. The output shaft S passes through the opening 53 and the cylinder 54, towards the inside of the hollow disc 52, as shown in Figure 6.

Still referring to Figure 6, the cylinder 54 has at its end located inside the hollow disc 52, a flat rectangular bar 90B, whose construction is similar to the construction of flat rectangular bar 90A of Figures 5, 8, 8A-8C and 9.

An assembly similar to the one detailed with reference to Figures 5, 8, 8A-8C and 9 is used to drive into rotation the output shaft S, unidirectionally, by means of a pulley disposed on the output shaft S, similarly to the pulley 97 on the intermediate shaft I, connected to the gears and pulleys incorporating one-way clutches on the flat rectangular bar 90B, by means of a belt, as detailed above with reference to Figures 5, 8, 8A-8C and 9.

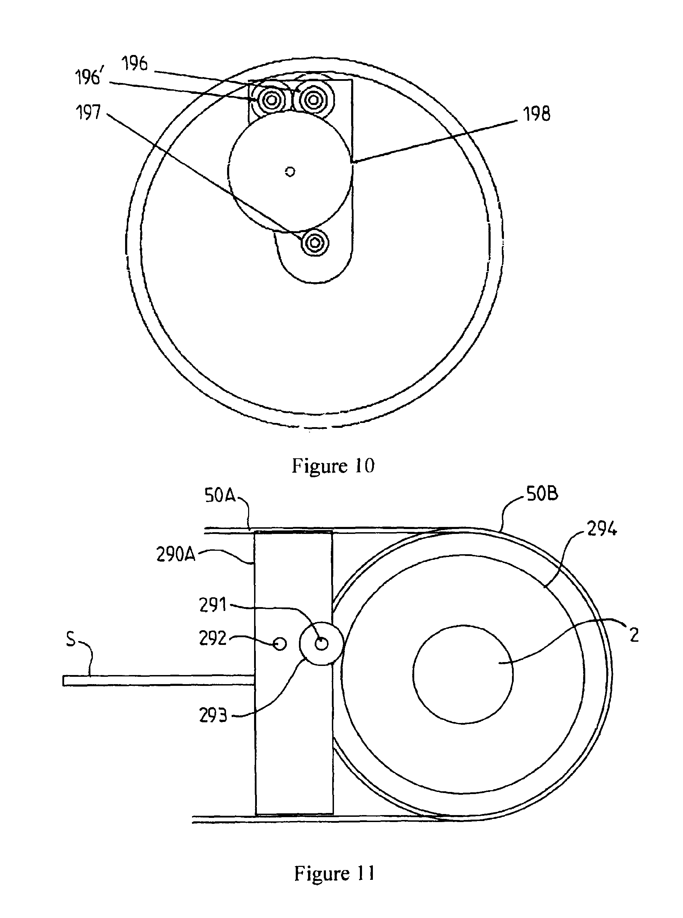

Figure 10 shows a third embodiment, very similar to the embodiment detailed above, where the belt and pulleys are replaced by gears. Toothed gears 196, 196' and 197 replace the pulleys 96, 96' and 97, whereas a toothed gear 198 replaces the belt 98. The construction of the housing is otherwise similar.

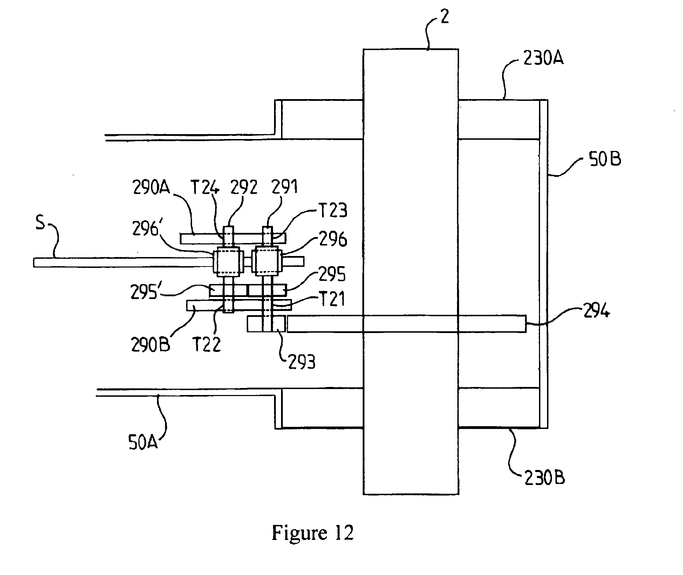

The Figures 11 and 12 show a fourth embodiment.

The outer structure of the housing is the same as in Figure 4, the inner mechanical transmission changing.

Only the transmission from the input shaft in the cylindrical part 50B, transverse to the output shaft is shown for more clarity, the transmission from the input shaft parallel with the output shaft being the same as previously described, with reference to Figure 6.

In this fourth embodiment, an input shaft 2 is supported by two bearings 230A and 230B, at each end of the cylindrical part 50B. Inside the cylindrical part 50B of the housing 50, the shaft 2 supports a large gear 294. The radius of the gear 294 is slightly inferior to the radius of the inner part of the cylindrical part 50B.

The gear 294 is rotated clockwise and anticlockwise with the input shaft 2.

Two plates 290A and 290B, parallel to each other, are provided inside the cylindrical part 50A of the housing 50, extending vertically from the bottom of the housing to the top of the housing, the plates 290A and 290B, as shown in Figure 12 being shifted from the central part of the cylindrical part 50A of the housing 50. The surfaces of the plates 290A and 290B are parallel to the direction of the output shaft S.

Two axis 291 and 292 extend between the two plates 290A and 290B, the two axis being supported on each plate into through holes, respectively T21, T22 and T23, T24 formed on the plates 290A and 290B, respectively at a distance above the output shaft S.

The first axis bears on the side of the plate 290A opposite to the output shaft S a small gear 293, meshing with the large gear 294, and rotating with the first axis 291 clockwise or anticlockwise. Between the two plates 290A and 290B, the first axis 291 bears, similarly to the system described in relation to Figure 7, in this order, an interlocking gear 295 and a first worm gear 296.

The second axis 292 does not protrude outside the space between the two plates 290A and 290B, and supports in this order a second interlocking gear 295', meshing with the first interlocking gear 295, and a second worm gear 296'.

The worm gears 296 and 296' each include a one-way clutch, both one-way clutches locking in the same direction of rotation, and both engage with the output axis S to drive it into rotation when they are activated (one way clutch incorporated locks).

Similarly to the system described in relation to Figure 7, when the input shaft rotates clockwise, as seen from Figure 11, so does the large gear 294.

The large gear drives into rotation the small gear 293 anticlockwise. Supposing the one-way clutch incorporated in the first worm gear 296 locks when the axis 291 rotates clockwise, the anticlockwise rotation of the small gear does not lock the worm gear 296.

The anticlockwise rotation of the axis 291 implies, through the interlocking gears 295 and 295', a clockwise rotation of the second axis 292.

The clockwise rotation of the second axis 292 in turn locks the one-way clutch incorporated in the second worm gear 296', resulting in the clockwise rotation of the output shaft S.

Similarly, when the input shaft 2 rotates anticlockwise, the worm gear 296 will lock (the worm gear 296' remaining unlocked), resulting in the clockwise rotation of the output shaft S.

The second and third embodiments allow a higher ratio between the input shafts and the output shaft, without a torque on the output shaft.

The fourth embodiment shows that the transmission of the rotation can also be off-centred, contrary to the first to third embodiments.

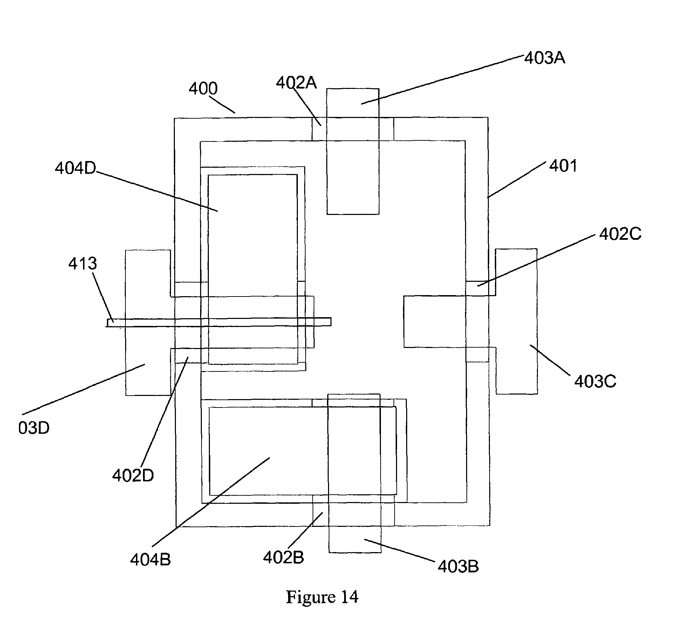

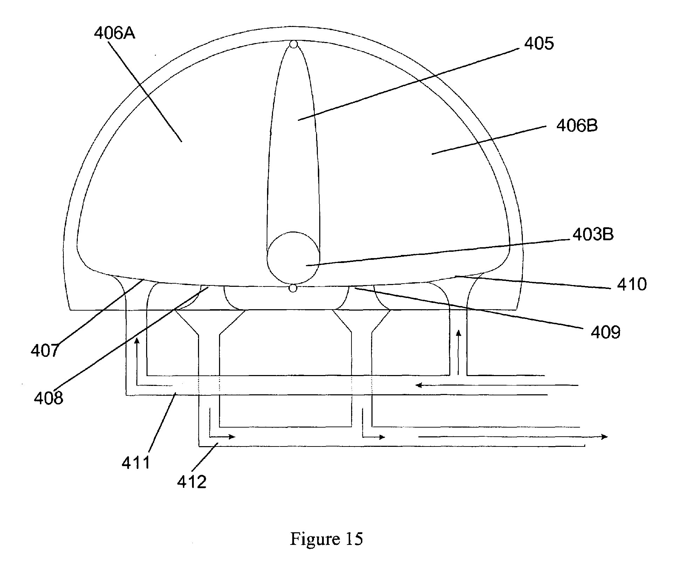

Figures 14 and 15 show an hydraulic embodiment of the invention, particularly adapted to large size devices, where the torques on mechanical transmission means is too important.

In this fifth embodiment, two independent hydraulic pumps are used to transmit the input rotation motion of each input axis to the output rotation axis.

The device 400 according to the fifth embodiment comprises a generally rectangular housing 401. A bearing 402A, 402B, 402C and 402D is mounted at the centre of each wall of the housing 401.

Each bearing 402A, 402B, 402C and 402D support a shaft, respectively 403A, 403B, 403C and 403D, so that one end of each shaft 403A, 403B, 403C and 403D protrudes inside the housing 401, the other end of each shaft 403A, 403B, 403C and 403D protruding outside the bearing. The shafts 403A, 403B, 403C and 403D are aligned in pairs, so that shafts 403A, 403B are aligned, and their rotation axis constitute the second input rotation axis, and shafts 403C, 403D are aligned, and their rotation axis constitute the first input rotation axis.

A shaft from each pair, respectively 403B, 403D, has its end inside the housing 401 sealingly connected to an hydraulic pump, respectively 404B, 404D.

The hydraulic pumps 404B, 404D are more fully described with respect to Figure 15.

Each hydraulic pump 404B, 404D (pump 404B depicted on Figure 15) generally has a half-sphere shape, whose inside is sealingly separated by a pivoting paddle 405 into two chambers 406A, 406B of equal dimensions in the steady state position. The input shaft 403B is sealingly connected to the paddle 405, and drives into rotation the paddle 405 when a rotation motion is exerted on the end of the shaft 403B protruding outside the housing 401.

Each chamber 406A, 406B is provided at its lower end with a pair of one-way valves, respectively 407 and 408 for chamber 406A, and 409 and 410 for chamber 406B, the one-way valves 407 and 408, and 409 and 410 in a chamber operating in opposite directions, the one-way valves 407 and 410 being inlet one-way valves, the one-way valves 408 and 409 being outlet one-way valves.

The inlet one-way valves 407 and 410 are both connected to the same inlet pipe 411, and the outlet one-way valves are both connected to the same outlet pipe 412.

Each pair 407, 408 and 409, 410 therefore comprise a inlet valve 407, 410, opening when the pressure in the inlet pipe 411 is greater than the pressure in the related chamber, and an outlet valve 408, 409 opening when the pressure in the related chamber is greater than the pressure in the outlet pipe 412.

As stated above, the lower end of the paddle 405 is linked to the related input rotation axis 403B, and the movement of the related input rotation axis 403B moves the paddle 405 and creates pressure differentials in the chambers 406A, 406B, that open the corresponding one-way valves 407, 408, 409, 410.

The outlet pipe 412 is connected to an output pipe 413, whose direction is the same as the input rotation axis 403D, and whose distal end features a unidirectional hydraulic turbine (not shown on the drawings), that creates the unidirectional rotation motion on the output rotation axis, the output pipe being aligned with the input rotation axis 403D. The output pipe 413 is then looped back on the inlet pipe 411, so that the hydraulic circuit (411, 412, 413) is closed.

Any bidirectional rotation movement on the input shafts 403B, 403D therefore creates a unidirectional movement on the output rotation axis.

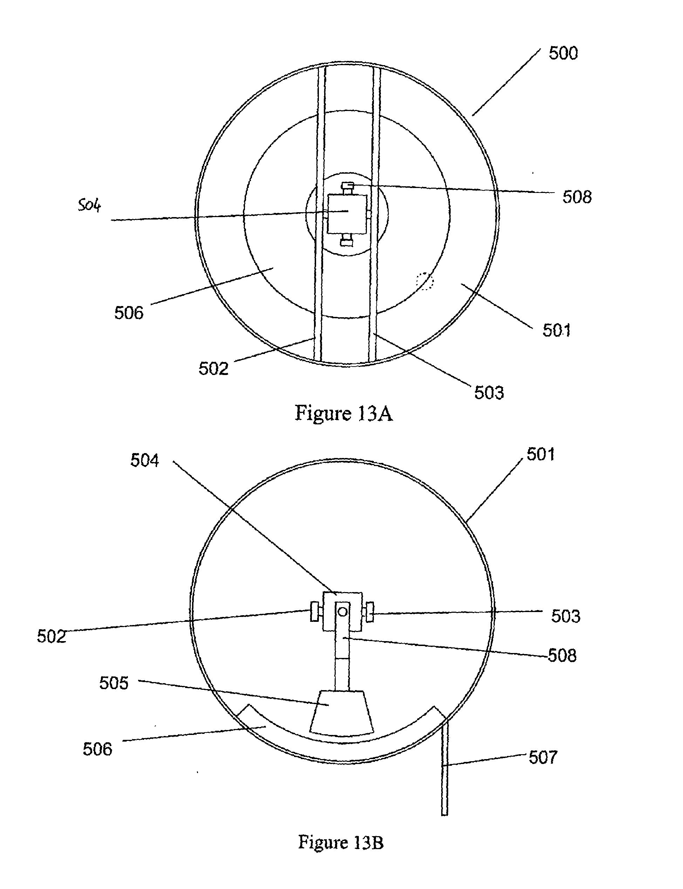

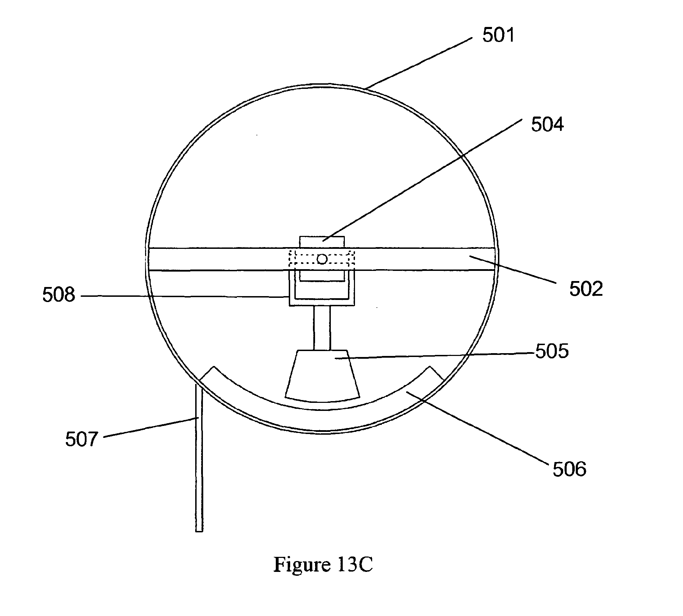

Figures 13A, 13B, 13C show a power production system 500, according to an embodiment of the invention, to be used to produce power in the sea. It consists in a spherical buoy 501, into which are formed two parallel beams 502, 503, both beams 502, 503 forming in use a chord of the sphere 501 in the same substantially horizontal plane, a device 504 according to the invention being pivotally mounted between these two parallel beams 502, 503, the pivoting axis of the device 504 with respect to said beams 502, 503 constituting the first input rotation axis of the device 504.

A weight in the form of a pendulum 505 fixed to a U-shaped part 508, is pivotally suspended to the device 504, the pivoting axis of the pendulum 505 being perpendicular to the first input rotation axis and in the same plane, and constituting the second input rotation axis of the device 504.

A second weight 506 is centrally and symmetrically fixed to the base of the buoy 501, inside the buoy 501, so that the second weight 506 is uniformly provided on the base of the buoy 501 in the steady state position of the pendulum 505.

The buoy 501 has an anchorage 507, offset from the steady state position of the pendulum 505, thereby producing a non stable movement of the system 500 when the tide moves the system 500, as the pendulum 505 and the offset anchorage 507 both impart to the system a different steady state position. This non-stable movement produces a movement of the device 504 with respect to the first and second input rotation axes, and therefore provides bidirectional rotation movements on the input rotation axes of the device 504, to create power with the device, as stated above.

Other constructions working on this very same principle of the invention can be readily found, as various means exist to effect the transmission between the rotation axes shafts and the output rotation axis.

Drives using gears or pulley and belt assemblies have been described, yet any mechanical transmission means, such as toothed gears, chains and cogs, belts and pulley wheels, hydraulic drives and any combination thereof are thought to fall within the scope of the invention.

Similarly, embodiments have been described where the transmission means are inside the device. The man skilled in the art will readily find embodiments with off-centred drives, which are all to fall within the scope of the invention.

## Claims

1. Device producing unidirectional rotation motion as output from any bidirectional rotation motion as input, comprising:
- a first input rotation axis (1);
- a second input rotation axis (2), orthogonal to the first input rotation axis (1);
- an output rotation axis (1; S);
transmission means (6A, 6B, 6C, 7A, 7B, 9A, 9B, 9C, 13A, 13B ; 95, 95', 96, 96', 97) provided between the first input rotation axis (1) and the output rotation axis (1; S) and between the second input rotation axis (2) and the output rotation axis (1; S), in order to convert a clockwise or anti-clockwise rotation motion on the first input rotation axis (1) and/or on the second input rotation axis (2) into a unidirectional rotation motion on the output rotation axis (1; S), one of the first (1) and second (2) input rotation axes being the same as the output rotation axis (1; S), **characterized in that** the transmission means (6A, 6B, 6C, 7A, 7B; 95, 95', 96, 96', 97) from the first input rotation axis (1) to the output rotation axis (1; S) and the transmission means (9A, 9B, 9C, 13A, 13B ; 95, 95', 96, 96', 97) from the second input rotation axis (2) to the output rotation axis (1; S) are independent.

2. Device according to claim 1, **characterized in that** the transmission means (6A, 6B, 6C, 7A, 7B; 95, 95', 96, 96', 97) between the first input rotation axis (1) and the output rotation axis (1; S) and the transmission means (9A, 9B, 9C, 13A, 13B ; 95, 95', 96, 96', 97) between the second input rotation axis (2) and the output rotation axis (1; S) each comprise at least a pair of unidirectional members (7A, 7B; 13A, 13B; 96, 96'), wherein for each pair, one member is activated by a first rotation direction on the corresponding input rotation axis, the other member of the pair being activated by a second rotation direction on the corresponding input rotation axis, opposite to the first rotation direction.

3. Device according to any of claims 1 to 2, **characterized in that** the transmissions means between the input rotation axes and the output rotation axis (1; S) are any of toothed gears, chains and cogs, belts and pulley wheels, hydraulic drives and any combination thereof.

4. Device according to any of claims 1 to 3, **characterized in that** shafts are mounted in alignment with the two input rotation axes (1, 2) to provide the bidirectional input rotation motion on the two input rotation axes (1, 2).

5. Device according to any of claims 1 to 4, **characterized in that** a shaft is mounted in alignment with the output rotation axis (1; S), the unidirectional rotation output motion being transferred to the shaft by the transmission means.

6. Device according to claim 5, **characterized in that** the gear ratios between the first input rotation axis (1) and the output shaft (1; S), and between the second input rotation axis (2) and the output shaft (1; S) are identical.

7. Device according to claim 5, **characterized in that** the gear ratios between the first input rotation axis (1) and the output shaft (1; S), and between the second input rotation axis (2) and the output shaft are different (1; S).

8. Device according to claim 3, **characterized in that** the transmission means for the input rotation axes are hydraulic drives, any bidirectional rotation movement on the input rotation axis producing an output fluid flow, the output unidirectional rotation motion of the device being produced by an unidirectional hydraulic turbine driven by the fluid flow.

9. Power production system (500), **characterized in that** it comprises:
- the device (504) as claimed in any of the claims 1 to 8 ;
- input means cooperating with an outer environment of the system, to create any bidirectional rotation motion on any of the input rotation axes;
- power production means provided on the output rotation axis to create power from the unidirectional rotation motion created on the output rotation axis.

10. Power production system (500) according to claim 9, **characterized in that** said power production means is an alternator.

11. Power production system (500) according to claim 9 or claim 10, **characterized in that** the outer environment is a fluid flow.

12. Power production system (500) according to claim 11, **characterized in that** the outer environment is the sea and **in that** input means consist in a spherical buoy (501), into which are formed two parallel beams (502, 503), both beams (502, 503) forming in use a chord of the sphere in the same substantially horizontal plane, the device (504) being pivotally mounted between these two parallel beams (502, 503), the pivoting axis of the device (504) with respect to said beams (502, 503) constituting the first input rotation axis of the device, a weight (505) being pivotally suspended to the device (504), the pivoting axis of the suspended weight (505) being perpendicular to the first input rotation axis and constituting the second input rotation axis of the device (504), a second weight (506) being centrally fixed to the base of the buoy (501), and the buoy (501) having an offset anchorage (507) producing a non stable movement of the buoy (501) and therefore a rotation of the device (504) on its two input rotation axes to provide bidirectional rotation movements on the input rotation axes of the device (504).

13. Power production system (500) according to claim 12, **characterized in that** the two parallel beams (502, 503) are formed in the central horizontal plane of the sphere.

## Patentansprüche

1. Vorrichtung, die aus einer eingehenden bidirektionalen Drehbewegung eine abgehende unidirektionale Drehbewegung erzeugt, umfassend:
- ein erste Eingangsdrehachse (1);
- eine zweite Eingangsdrehachse (2), rechtwinklig zur ersten Eingangsdrehachse (1);
- eine Ausgangsdrehachse (1; S); Übertragungsmittel (6A, 6B, 6C, 7A, 7B, 9A, 9B, 9C, 13A, 13B; 95, 95', 96, 96', 97), die zwischen der ersten Eingangsdrehachse (1) und der Ausgangsdrehachse (1; S) und zwischen der zweiten Eingangsdrehachse (2) und der Ausgangsdrehachse (1; S) vorgesehen sind, um eine Drehbewegung an der ersten Eingangsdrehachse (1) und/oder an der zweiten Eingangsdrehachse (2) in Uhrzeigerrichtung oder entgegen der Uhrzeigerrichtung in eine unidirektionale Drehbewegung an der Ausgangsdrehachse (1; S) umzuwandeln, wobei die erste (1) oder die zweite (2) Eingangsdrehachse dieselbe ist wie die Ausgangsdrehachse (1; 5), **dadurch gekennzeichnet, dass** die Übertragungsmittel (6A, 6B, 6C, 7A, 7B; 95, 95', 96, 96', 97) von der ersten Eingangsdrehachse (1) zur Ausgangsdrehachse (1; S) und die Übertragungsmittel (9A, 9B, 9C, 13A, 13B; 95, 95', 96, 96', 97) von der zweiten Eingangsdrehachse (2) zur Ausgangsdrehachse (1; S) selbständig sind.

2. Vorrichtung nach Anspruch 1, **dadurch gekennzeichnet, dass** die Übertragungsmittel (6A, 6B, 6C, 7A, 7B; 95, 95', 96, 96', 97) zwischen der ersten Eingangsdrehachse (1) und der Ausgangsdrehachse (1; S) und die Übertragungsmittel (9A, 9B, 9C, 13A, 13B; 95, 95', 96, 96', 97) zwischen der zweiten Eingangsdrehachse (2) und der Ausgangsdrehachse (1; S) jeweils mindestens ein Paar unidirektionaler Elemente (7A, 7B; 13A, 13B; 96, 96') umfassen, wobei bei jedem Paar ein Element durch eine erste Drehrichtung an der entsprechenden Eingangsdrehachse aktiviert wird, und das andere Element des Paars durch eine zweite Drehrichtung an der entsprechenden Eingangsdrehachse entgegengesetzt zur ersten Drehrichtung aktiviert wird.

3. Vorrichtung nach einem der Ansprüche 1 bis 2, **dadurch gekennzeichnet, dass** die Übertragungsmittel zwischen den Eingangsdrehachsen und der Ausgangsdrehachse (1; S) Zahnräder oder Ketten und Zähne oder Riemen und Riemenscheiben oder hydraulische Antriebe und jede beliebige Kombination davon sind.

4. Vorrichtung nach einem der Ansprüche 1 bis 3, **dadurch gekennzeichnet, dass** Wellen nach den beiden Eingangsdrehachsen (1, 2) ausgerichtet montiert sind, um für die bidirektionale Eingangsdrehbewegung an den beiden Eingangsdrehachsen (1, 2) zu sorgen.

5. Vorrichtung nach einem der Ansprüche 1 bis 4, **dadurch gekennzeichnet, dass** eine Welle nach der Ausgangsdrehachse (1; S) ausgerichtet montiert ist, wobei die unidirektionale Ausgangsdrehbewegung von den Übertragungsmitteln auf die Welle übertragen wird.

6. Vorrichtung nach Anspruch 5, **dadurch gekennzeichnet, dass** die Übersetzung zwischen der ersten Eingangsdrehachse (1) und der Ausgangswelle (1; S) und zwischen der zweiten Eingangsdrehachse (2) und der Ausgangswelle (1; S) identisch ist.

7. Vorrichtung nach Anspruch 5, **dadurch gekennzeichnet, dass** sich die Übersetzung zwischen der ersten Eingangsdrehachse (1) und der Ausgangswelle (1; S) und zwischen der zweiten Eingangsdrehachse (2) und der Ausgangswelle (1; S) voneinander unterscheiden.

8. Vorrichtung nach Anspruch 3, **dadurch gekennzeichnet, dass** die Übertragungsmittel für die Eingangsdrehachsen hydraulische Antriebe sind, wobei jede bidirektionale Drehbewegung an der Eingangsdrehachse einen Ausgangsflüssigkeitsstrom erzeugt, wobei die unidirektionale Ausgangsdrehbewegung der Vorrichtung von einer unidirektionalen Hydraulikturbine erzeugt wird, die von dem Flüssigkeitsstrom angetrieben wird.

9. Energieerzeugungssystem (500), **dadurch gekennzeichnet, dass** es Folgendes umfasst:
- die Vorrichtung (504) nach einem der Ansprüche 1 bis 8;
- Eingangsmittel, die mit einer Außenumgebung des Systems zusammenwirken, um eine bidirektionale Drehbewegung an einer der Eingangsdrehachsen zu erzeugen;
- Energieerzeugungsmittel, die an der Ausgangsdrehachse vorgesehen sind, um Energie aus der unidirektionalen Drehbewegung zu erzeugen, die an der Ausgangsdrehachse erzeugt wird.

10. Energieerzeugungssystem (500) nach Anspruch 9, **dadurch gekennzeichnet, dass** das Energieerzeugungsmittel ein Wechselstromgenerator ist.

11. Energieerzeugungssystem (500) nach Anspruch 9 oder Anspruch 10, **dadurch gekennzeichnet, dass** die Außenumgebung ein Flüssigkeitsstrom ist.

12. Energieerzeugungssystem (500) nach Anspruch 11, **dadurch gekennzeichnet, dass** die Außenumgebung das Meer ist und dass die Eingangsmittel aus einer kugelförmigen Boje (501) bestehen, in der zwei parallele Träger (502, 503) ausgebildet sind, wobei beide Träger (502, 503) im Einsatzfall eine Sehne der Kugel in derselben im Wesentlichen horizontalen Ebene bilden, wobei die Vorrichtung (504) schwenkbar zwischen diesen beiden parallelen Trägern (502, 503) montiert ist, wobei die Schwenkachse der Vorrichtung (504) zu den Trägern (502, 503) die erste Eingangsdrehachse der Vorrichtung darstellt, wobei ein Gewicht (505) schwenkbar an der Vorrichtung (504) hängt, wobei die Schwenkachse des aufgehängten Gewichts (505) senkrecht zur ersten Eingangsdrehachse verläuft und die zweite Eingangsdrehachse der Vorrichtung (504) darstellt, wobei ein zweites Gewicht (506) mittig an dem Unterteil der Boje (501) befestigt ist und die Boje (501) eine versetzte Verankerung (507) aufweist, die eine nicht stabile Bewegung der Boje (501) erzeugt und deshalb eine Drehung der Vorrichtung (504) an ihren beiden Eingangsdrehachsen, um für bidirektionale Drehbewegungen an den Eingangsdrehachsen der Vorrichtung (504) zu sorgen.

13. Energieerzeugungssystem (500) nach Anspruch 12, **dadurch gekennzeichnet, dass** die beiden parallelen Träger (502, 503) in der waagerechten Mittelebene der Kugel ausgebildet sind.

## Revendications

1. Dispositif produisant un mouvement de rotation unidirectionnel en sortie à partir de mouvement de rotation bidirectionnel quelconque en entrée, comprenant :
- un premier axe de rotation d'entrée (1) ;
- un second axe de rotation d'entrée (2), orthogonal au premier axe de rotation d'entrée (1) ;
- un axe de rotation de sortie (1 ; S) ;
des moyens de transmission (6A, 6B, 6C, 7A, 7B, 9A, 9B, 9C, 13A, 13B ; 95, 95', 96, 96', 97) disposés entre le premier axe de rotation d'entrée (1) et l'axe de rotation de sortie (1 ; S) et entre le second axe de rotation d'entrée (2) et l'axe de rotation de sortie (1 ; S), afin de convertir un mouvement de rotation dans le sens horaire ou dans le sens antihoraire sur le premier axe de rotation d'entrée (1) et/ou sur le second axe de rotation d'entrée (2) en un mouvement de rotation unidirectionnel sur l'axe de rotation de sortie (1 ; S), l'un des premier (1) et second (2) axes de rotation d'entrée étant le même que l'axe de rotation de sortie (1 ; S), **caractérisé par le fait que** les moyens de transmission (6A, 6B, 6C, 7A, 7B ; 95, 95', 96, 96', 97) du premier axe de rotation d'entrée (1) à l'axe de rotation de sortie (1 ; S) et les moyens de transmission (9A, 9B, 9C, 13A, 13B ; 95, 95', 96, 96', 97) du second axe de rotation d'entrée (2) à l'axe de rotation de sortie (1 ; S) sont indépendants.

2. Dispositif selon la revendication 1, **caractérisé par le fait que** les moyens de transmission (6A, 6B, 6C, 7A, 7B ; 95, 95', 96, 96', 97) entre le premier axe de rotation d'entrée (1) et l'axe de rotation de sortie (1 ; S) et les moyens de transmission (9A, 9B, 9C, 13A, 13B ; 95, 95', 96, 96', 97) et entre le second axe de rotation d'entrée (2) et l'axe de rotation de sortie (1 ; S) comprennent chacun au moins une paire d'éléments unidirectionnels (7A, 7B ; 13A, 13B ; 96, 96'), pour chaque paire, un élément étant activé par une première direction de rotation sur l'axe de rotation d'entrée correspondant, l'autre élément de la paire étant activé par une seconde direction de rotation sur l'axe de rotation d'entrée correspondant, opposée à la première direction de rotation.

3. Dispositif selon l'une quelconque des revendications 1 à 2, **caractérisé par le fait que** les moyens de transmission entre les axes de rotation d'entrée et l'axe de rotation de sortie (1 ; S) sont n'importe lesquels parmi des engrenages dentés, des chaînes et des dents, des courroies et des roues de poulie, des entraînements hydrauliques et n'importe quelle combinaison de ceux-ci.

4. Dispositif selon l'une quelconque des revendications 1 à 3, **caractérisé par le fait que** des arbres sont montés en alignement avec les deux axes de rotation d'entrée (1, 2) pour délivrer le mouvement de rotation d'entrée bidirectionnel sur les deux axes de rotation d'entrée (1, 2).

5. Dispositif selon l'une quelconque des revendications 1 à 4, **caractérisé par le fait qu'**un arbre est monté en alignement avec l'axe de rotation de sortie (1 ; S), le mouvement de sortie de rotation unidirectionnel étant transféré à l'arbre par les moyens de transmission.

6. Dispositif selon la revendication 5, **caractérisé par le fait que** les rapports d'engrenage entre le premier axe de rotation d'entrée (1) et l'axe de sortie (1 ; S), et entre le second axe de rotation d'entrée (2) et l'axe de sortie (1 ; S) sont identiques.

7. Dispositif selon la revendication 5, **caractérisé par le fait que** les rapports d'engrenage entre le premier axe de rotation d'entrée (1) et l'arbre de sortie (1 ; S), et entre le second axe de rotation d'entrée (2) et l'arbre de sortie (1 ; S) sont différents.

8. Dispositif selon la revendication 3, **caractérisé par le fait que** les moyens de transmission pour les axes de rotation d'entrée sont des entraînements hydrauliques, tout mouvement de rotation bidirectionnel sur l'axe de rotation d'entrée produisant un écoulement de fluide de sortie, le mouvement de rotation unidirectionnel de sortie du dispositif étant produit par une turbine hydraulique unidirectionnelle entraînée par l'écoulement de fluide.

9. Système de production d'énergie (500), **caractérisé par le fait qu'**il comprend :
- le dispositif (504) selon l'une quelconque des revendications 1 à 8 ;
- des moyens d'entrée coopérant avec un environnement externe du système, pour créer n'importe quel mouvement de rotation bidirectionnel sur n'importe lequel des axes de rotation d'entrée ;
- des moyens de production d'énergie disposés sur l'axe de rotation de sortie pour créer de l'énergie à partir du mouvement de rotation unidirectionnel créé sur l'axe de rotation de sortie.

10. Système de production d'énergie (500) selon la revendication 9, **caractérisé par le fait que** lesdits moyens de production d'énergie sont un alternateur.

11. Système de production d'énergie (500) selon la revendication 9 ou la revendication 10, **caractérisé par le fait que** l'environnement externe est un écoulement de fluide.

12. Système de production d'énergie (500) selon la revendication 11, **caractérisé par le fait que** l'environnement externe est la mer et **par le fait que** les moyens d'entrée sont constitués d'une bouée sphérique (501), dans laquelle sont formées deux poutres parallèles (502, 503), les deux poutres (502, 503) formant lors de l'utilisation, une corde de la sphère dans le même plan sensiblement horizontal, le dispositif (504) étant monté de manière pivotante entre les deux poutres parallèles (502, 503), l'axe de pivot du dispositif (504) par rapport auxdites poutres (502, 503) constituant le premier axe de rotation d'entrée du dispositif, un poids (505) étant suspendu de manière pivotante au dispositif (504), l'axe de pivot du poids suspendu (505) étant perpendiculaire au premier axe de rotation d'entrée et constituant le second axe de rotation d'entrée du dispositif (504), un second poids (506) étant fixé de manière centrale à la base de la bouée (501), et la bouée (501) ayant un ancrage décalé (507) produisant un mouvement non stable de la bouée (501) et par conséquent une rotation du dispositif (504) sur ses deux axes de rotation d'entrée pour délivrer des mouvements de rotation bidirectionnels sur les axes de rotation d'entrée du dispositif (504).

13. Système de production d'énergie (500) selon la revendication 12, **caractérisé par le fait que** les deux poutres parallèles (502, 503) sont formées dans le plan horizontal central de la sphère.
